# EUROPEAN PATENT SPECIFICATION

(11) **EP 4 359 762 B1**
(45) Date of publication and mention of the grant of the patent: **05.08.2026**
(21) Application number: 22734002.3
(22) Date of filing: 23.06.2022
(51) Int. Cl.: G01N 21/01, G01N 21/31, G01N 21/03, G01N 21/3577, G01N 21/359

(54) **A SYSTEM AND METHOD FOR IDENTIFYING A BIOLOGICAL SAMPLE IN A SAMPLE HOLDER, AND A BIOPSY DEVICE FOR OBTAINING A BIOLOGICAL SAMPLE OF TISSUE**
EIN SYSTEM UND VERFAHREN ZUR IDENTIFIZIERUNG EINER BIOLOGISCHEN PROBE IN EINEM PROBENHALTER UND EIN BIOPSIEGERÄT ZUM ERHALTEN EINER BIOLOGISCHEN GEWEBEPROBE
SYSTEME ET PROCEDE D'IDENTIFICATION D'UN ECHANTILLON BIOLOGIQUE DANS UN PORTE-ECHANTILLON, ET DISPOSITIF DE BIOPSIE POUR OBTENIR UN ECHANTILLON BIOLOGIQUE DE TISSU

(30) Priority: 24.06.2021 NL 2028538
(43) Date of publication of application: 01.05.2024
(73) Proprietor: Clearstream Technologies Limited, Enniscorthy, County Wexford (IE)
(72) Inventor: NORRIS, Christopher, Enniscorthy, County Wexford (IE); DHANPALWAR, Prathamesh Sharad, Enniscorthy, County Wexford (IE); MYLES, Luke Bernard Anthony, Enniscorthy, County Wexford (IE)
(74) Representative: Hoffmann Eitle
(86) International application number: PCT/EP2022/067155
(87) International publication number: WO 2022/268944

(56) References cited:
- WO-A1-2014/088881
- WO-A1-89/09390
- JP-A- 2017 067 719
- RU-U1- 188 742
- RU-U1- 188 742
- US-A1- 2012 184 827
- US-A1- 2014 233 015
- US-A1- 2015 182 204
- US-A1- 2019 388 069

## Description

### Technical Field

The present invention relates to a system for identifying a biological sample in a sample holder and a method for identifying a biological sample in a sample holder.

### Background of the Invention

The detection and identification of diseased tissue is of great importance in modern medicine. Cancer is still one of the leading causes of death worldwide and earlier and simpler detection and identification of tumours could save countless lives.

Cancer is often identified using a biopsy where a small sample of body tissue is taken from a patient in a medical procedure so it can be examined under a microscope. When the tissue sample is examined under the microscope, abnormal cells may be identified, which can help to diagnose a specific condition, such as a tumour. The problem with these procedures is that they are slow, expensive and they require specially trained medical staff to examine the tissue and make a determination of whether the tissue is diseased.

The present invention proposes utilizing the difference in absorption spectra between different tissues and between healthy tissue and malignant tissue to identify the tissue and make a determination of whether the tissue is diseased.

Spectrophotometers for measuring the absorption spectrum of a sample over a range of wavelengths exist in the art. However, these devices are complex and expensive and do not give an automatic identification of the biological sample and whether it relates to a diseased tissue.

There is hence a need in the art for a simple automated system which makes an accurate and quick identification of a biological sample and a determination of whether the biological sample comprises diseased tissue.

US 20140233015 A1 discloses a portable tabletop fluid sampling device which simplifies spectral analysis to produce an accurate but inexpensive chromatic fingerprint for fluid samples. In one embodiment, the sampling device uses an array of variable wavelength LED emitters and photodiode detectors to measure Rayleigh scattering of electromagnetic energy from the fluid sample contained in the cuvette. Either the fluid itself or particles suspended in the fluid can then be identified by performing spectral pattern matching to compare results of a spectral scan against a library of known spectra. A wide range of applications include substance identification, security screening, authentication, quality control and medical diagnostics.

RU 188742U1 discloses a spectrophotometer. JP 2017067719 A discloses an optical measuring instrument. WO 8909390 A1 discloses a method for detecting the presence of contaminants in a reusable plastic food or beverage container. US 2015/0182204 A1 discloses a system and method for attaching a biopsy collecting device to a spectroscopy system.

US 2012/184827 A1 discloses a miniature medical spectrometer, the spectrometer comprising: a room temperature, electrically excited, solid state two photon laser generating high intensity broad wavelength; a light projection optics, projecting said generated light on biological subject; a light collection optics, collecting reflected light from said biological subject; a wavelength selector spectrally analyzing said collected light; a detector, detecting said analyzed light; and a controller analyzing the reflected spectra and calculating result indicative of the medical state of the biological subject based on said spectrum. WO 2014/088881 A1 discloses an adapter used in connection with detecting the optical properties of a physical sample(s), such as, for example, blood samples or other physical specimens. More specifically, certain embodiments of the described invention relate to an adapter for use with hand-held electronic devices, the adapter being configured to hold a sample(s) or a sample vessel containing the sample(s), so that the detector of the device may detect light, an image, and/or other data corresponding to an optical property of the sample.

### Summary of the Invention

In a first aspect of the present disclosure, there is provided a system for identifying a biological sample in a sample holder as defined in appended independent claim 1.

Throughout this disclosure, 'substantially monochrome' light refers to light which has a peak intensity at a predetermined wavelength and a narrow spectral bandwidth. The spectral bandwidth may be less than 200 nm, preferably 100 nm, even more preferably 50 nm. 'Substantially monochrome' light may be emitted, for example, by a laser diode or an LED.

Throughout this disclosure, the term 'identifying a biological sample' means both identifying a type of tissue, e.g. breast tissue, as well as characterising whether a type of tissue is healthy or diseased, e.g. identifying whether the breast tissue is healthy breast tissue or malignant breast tissue.

In some embodiments, this may result in a system which can automatically identify a biological sample in a cheap, simple and accurate manner.

In some embodiments, this may also allow the automatic determination of a diseased biological tissue in a quick, simple and accurate manner.

The system further comprises a light blocking structure for holding the sample holder. The light blocking structure is configured to block any ambient light from reaching the sample when the light blocking structure is holding the sample holder.

In some embodiments, this may result in a reduction of ambient light noise in the light measurements and thereby in a more accurate identification of the biological sample.

The light blocking structure may be non-transparent.

Throughout this disclosure, the term 'non-transparent' means that light in the visible and/or infrared spectrum is blocked.

In some embodiments, this may result in a further reduction of ambient light noise and a more accurate identification of the biological sample.

The light blocking structure comprises a bore for accommodating the sample holder.

In some embodiments, this may result in a further reduction of ambient light noise and a more accurate identification of the biological sample.

In some embodiments, this may also allow the sample holder to be secured within the light blocking structure to give more repeatable and accurate results.

The bore has a single opening.

The bore may comprise a first section where the bore is wider and a second section where the bore is narrower.

The second section may be disposed further away from the opening of the bore.

In some embodiments, this may allow the sample holder to be easily and quickly inserted and removed from the light blocking structure.

The second section may be configured to engage the sides of the sample holder to hold the sample holder in place.

In some embodiments, this may allow the sample holder to be secured within the light blocking structure to give more repeatable and accurate results.

The bore may have a rectangular cross section.

In some embodiments, this may allow a standard rectangular cuvette to be used as the sample holder.

The light source is disposed at the opening of the bore and configured to emit the substantially monochromatic light into the bore.

The light detector is disposed at the opening of the bore. The light detector is configured to detect the substantially monochromatic light reflected or transmitted by the biological sample in the bore.

In some embodiments, this may result in a simple and robust set-up which can produce repeatable and accurate measurements.

The light blocking structure may further comprise a lid for enclosing the opening of the bore. The lid may enclose the light source and/or the lid may enclose the light detector such that ambient light is blocked from reaching the sample holder.

Some or all of the light may be blocked from reaching the sample holder.

In some embodiments, this may result in a further reduction of ambient light noise and a more accurate identification of the biological sample.

The light blocking structure may be a 3D-printed structure.

In some embodiments this may result in a simple and cheap reduction of ambient light noise.

The system may comprise the sample holder.

The sample holder may be a cuvette.

The cuvette may comprise a plurality of straight, transparent sides.

In some embodiments, this may reduce measurement errors from refraction and result in a more accurate identification of the biological tissue.

The light source may comprise an LED.

In some embodiments, this may result in a cheap and simple way to emit light with a narrow spectral bandwidth which will give more accurate results when identifying a biological sample.

The light source may comprise an infrared LED.

In some embodiments, infrared light may result in a higher absorption value from biological tissue, making it easier to distinguish between different biological samples.

The light source may comprise a laser diode. The substantially monochromatic light may be a laser light.

In some embodiments, this may result in a highly monochromatic light source which gives a more accurate identification of the biological sample.

The light source may comprise a tuneable laser.

In some embodiments, this may allow the wavelength of the emitted light to be changed such that an absorption value may be determined for a biological sample over a range of wavelengths and thereby give a more accurate identification of the biological sample.

The substantially monochromatic light emitted by the light source may have a peak intensity at a wavelength in the range of 300nm to 5000nm.

Preferably, the substantially monochromatic light emitted by the light source may have a peak intensity at a wavelength in the range of 500nm to 2000nm.

Even more preferably, the substantially monochromatic light emitted by the light source may have a peak intensity at a wavelength in the range of 800nm to 1000nm.

In some embodiments, this range of wavelengths may result in a higher absorption value from biological tissue, making it easier to distinguish between different biological samples.

The substantially monochromatic light emitted by the light source may have a spectral bandwidth below 200nm.

Preferably, the substantially monochromatic light emitted by the light source may have a spectral bandwidth below 100 nm.

Even more preferably, the substantially monochromatic light emitted by the light source may have a spectral bandwidth below 50 nm.

In some embodiments, this may result in more accurate and repeatable measurements.

The light detector may comprise a photodiode.

In some embodiments, this may result in a cheap and accurate way to detect the amount of light reflected or transmitted by the biological sample.

The photodiode may have a maximum sensitivity at a wavelength in the range of 300nm to 5000nm.

Preferably, the photodiode may have a maximum sensitivity at a wavelength in the range of 500nm to 2000nm.

Even more preferably, the photodiode may have a maximum sensitivity at a wavelength in the range of 800nm to 1000nm.

In some embodiments, this may result in maximum sensitivity of the photodiode coinciding with the peak intensity of the light emitter, giving more accurate measurements.

The light source and the light detector may be provided in a single integrated circuit package.

In some embodiments, this may allow the use of a simple and cheap off-the-shelf sensor package.

The system may further comprise a base support for holding the light source and the light detector.

In some embodiments, this may result in the light source and light detector being held securely in place, result in more repeatable and accurate measurements.

The controller may be configured to calculate an absorption value based on the ratio of the emitted light and the detected light and identify the biological sample based on the absorption value.

In some embodiments, this provides a simple and accurate way of identifying a biological sample.

The controller may be configured to calculate an absorption value based on the output measurements of the light detector.

The controller may be configured to calculate an absorption value based on the ratio of the output measurement of the light detector and the maximum output of the light detector.

The controller may identify the biological tissue from a look-up table of known biological tissues based on the calculated absorption value.

The controller may be configured to make a plurality of measurements using the light detector and calculate an average absorption value.

In some embodiments, this may result in a more accurate determination of the absorption value.

The system may further comprise a display connectable to the controller for showing the identified biological sample to the user.

In some embodiments, this may allow a user to make a quick and simple identification of the biological sample.

The controller may be further configured to show the measurements acquired by the light detector on the display.

In some embodiments, this may allow a user to check the accuracy of the measurements.

The system may further comprise an input device connectable to the display and the controller to allow a user to begin taking the measurements of the sample, and/or load previously acquired measurements for analysis, and/or export the measurements to a different programme, and/or clear the measurements.

In some embodiments, this may provide a simple way for the user to control the system and further process the measurement data.

Identifying the biological sample may comprise identifying whether the biological sample relates to a healthy tissue or a diseased or malignant tissue.

In an embodiment of the present disclosure, there is provided a biopsy device for obtaining a biological sample of tissue. The biopsy device comprises a biopsy needle; a sample holder for holding the biological sample; and a system for identifying the biological sample in the sample holder according to the first aspect of the present disclosure.

In some embodiments, this may allow a surgeon to make a quick initial identification of a biological sample obtained with the biopsy device to carry out a more effective biopsy procedure.

The system further comprises a light blocking structure for holding the sample holder. The light blocking structure is be configured to block any ambient light from reaching the sample when the light blocking structure is holding the sample holder.

In some embodiments, this may result in a reduction of ambient light noise in the light measurements and thereby in a more accurate identification of the biological sample.

The light blocking structure may be non-transparent.

In some embodiments, this may result in a further reduction of ambient light noise and a more accurate identification of the biological sample.

The light source may comprise a laser diode and the substantially monochromatic light may be a laser light.

In some embodiments, this may result in a highly monochromatic light source which gives a more accurate identification of the biological sample.

The substantially monochromatic light emitted by the light source may have a peak intensity at a wavelength in the range of 300nm to 5000nm, preferably 500nm to 2000nm, even more preferably 800nm to 1000nm.

In some embodiments, this range of wavelengths may result in a higher absorption value from biological tissue, making it easier to distinguish between different biological samples.

The substantially monochromatic light emitted by the light source may have a spectral bandwidth below 200nm, preferably, below 100 nm, even more preferably below 50 nm.

In some embodiments, this may result in more accurate and repeatable measurements.

The light detector may comprise a photodiode.

The photodiode may have a maximum sensitivity at a wavelength in the range of the 300nm to 5000nm, preferably 500nm to 2000nm, even more preferably 800nm to 1000nm.

The light source and the light detector are positioned on the same side of the sample holder.

In some embodiments, this may result in a simple and robust set-up which can produce repeatable and accurate measurements.

The light source and the light detector may be positioned inside the sample holder.

In some embodiments, this may result in more accurate identification of the biological sample. The light source and the light detector may be provided in a single integrated circuit package.

The controller may be configured to calculate an absorption value based on the ratio of the emitted light and the detected light or calculate an absorption value based on the ratio of the output measurement of the light detector and a maximum output of the light detector; and identify the biological sample based on the absorption value.

In some embodiments, this may result in a more accurate determination of the absorption value.

The controller may identify the biological tissue from a look-up table of known biological tissues based on the calculated absorption value.

The controller may be configured to make a plurality of measurements using the light detector and calculate an average absorption value.

In a second aspect of the present invention, there is provided a method for identifying a biological sample in a sample holder as defined in appended independent claim 14.

In some embodiments, this may result in a method which can identify a biological sample in a cheap, simple and accurate manner.

In some embodiments, this may result in a reduction of ambient light noise in the light measurements and thereby in a more accurate identification of the biological sample. Identifying the biological sample may comprise: calculating an absorption value based on the ratio of the emitted light and the detected light; and identifying the biological sample based on the absorption value.

Identifying the biological sample may comprise: calculating an absorption value based on based on the ratio of the output measurement of the light detector and the maximum output of the light detector; and identifying the biological sample based on the absorption value.

The absorption value may be an average absorption value based on a plurality of measurements made by the light detector.

In some embodiments, this may result in a more accurate determination of the absorption value.

Identifying the biological sample may comprise identifying whether the biological sample relates to a healthy tissue or a diseased or malignant tissue.

### Brief Description of the Drawings

To enable better understanding of the present disclosure, and to show how the same may be carried into effect, reference will now be made, by way of example only, to the accompanying drawings, in which:
FIG. 1 shows an embodiment of a system for identifying a biological sample in a sample holder according to the present disclosure;
FIGS. 2A to 2C show different views of the body portion of a light blocking structure used in the system of FIG. 1;
FIGS. 3A and 3B show different views of the lid of a light blocking structure used in the system of FIG. 1;
FIG. 4 shows a more detailed view of the light blocking structure, base structure and sensor package of FIG. 1;
FIG. 5 shows a block diagram for a graphical user interface for controlling the system of FIG. 1.
FIG. 6 shows a biopsy needle comprising a system for identifying a biological sample in a sample holder according to the present disclosure.

### Detailed Description

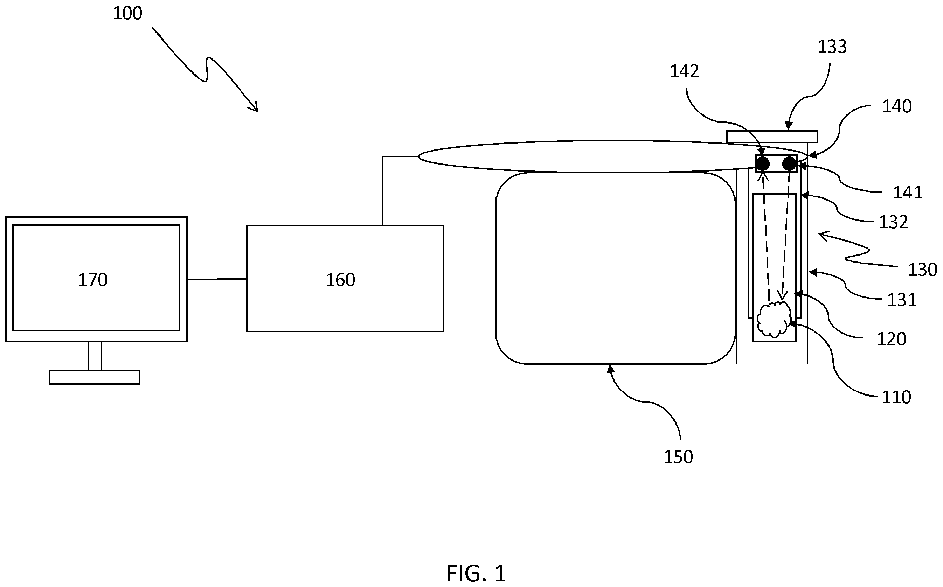

FIG. 1 shows a schematic diagram of a system 100 for identifying a biological sample 110.

The biological sample 110 may be tissue obtained from a human body in a biopsy, for example. The present system 100 can identify the type of tissue and, more importantly, identify whether the tissue is a healthy tissue or a diseased tissue based on the amount of light absorbed by the tissue.

Different tissues have different absorption spectra and absorb different amounts of light at different wavelengths. By shining light at a certain wavelength at the biological sample 110 and measuring the amount of light which is reflected or transmitted and therefore not absorbed by the biological sample 110, a determination of what type of tissue and whether the tissue is diseased can be made. The system 110 can be used, for example, to identify and detect cancerous breast tissue obtained from a biopsy. At a wavelength of 930nm, malignant breast tissue has a much lower absorption coefficient of about 0.009 mm⁻¹ compared to healthy breast tissue with an absorption coefficient of about 0.02 mm⁻¹. This means that the malignant breast tissue will absorb less light which can be detected by the system 100 and used to identify and detect malignant breast tissue.

In the same manner, tumours in other types of tissues can be detected and the oxygenation levels of blood can be determined.

The biological sample 110 may be placed in a sample holder 120, which may be a cuvette or a test tube. A cuvette is preferred because a standard cuvette has a square or rectangular cross section with straight transparent sides, which reduces the effects of refraction when light is shining onto a sample inside the cuvette.

The sample holder 120 is placed inside a light blocking structure 130. The light blocking structure 130 has a body portion 131 and a lid 133 which are both non-transparent and block any ambient light in the visible and infrared spectrum from reaching the sample 110. The body portion 131 has a rectangular or square shaped bore 132 which extends from an opening on one side of the body portion 131. The sample holder 120 is placed within the bore 132 of the light blocking structure 130.

At least part of the bore 132 is dimensioned such that it engages the sides of the sample holder 120 and secures the sample holder 120 in place such that it cannot move while measurements are taken. This allows more accurate and repeatable measurements to be taken.

The light blocking structure 130 may be made from a number of materials such as a dark coloured non-transparent plastic or a metal. The light blocking structure 130 may be 3D-printed or moulded.

A sensor package 140 comprising a light source in the form of a laser diode 141, such as a Vertical Cavity Surface Emitting Laser (VCSEL), and a light detector in the form of a photodiode 142 is disposed at the opening of the bore 132 and at the top of the body portion 131. The sensor package 140 may be, for example, a Vishay VCNL36887S, which is an off-the-shelf IC package and uses a Vertical Cavity Surface Emitting Laser (VCSEL) as a light source. This allows for simple and cheap construction of the system 100. The laser diode 141 and the photodiode 142 are held in place and supported by a base structure 150. The base structure 150 may be made from plastic and may be a 3D-printed structure. The lid 133 of the light blocking structure 130 is placed over the sensor package and the opening of the bore 132 such that any ambient light is blocked from reaching the sample 110. This results in less ambient light noise when taking measurements and identifying the biological sample 110.

The laser diode 141 emits light which is substantially monochromatic and has a peak intensity at a predetermined wavelength. The light emitted by the laser diode 141 may have a peak intensity at a wavelength in the range of 300nm to 5000nm, preferably 500nm to 2000nm, even more preferably 800nm to 1000nm, even more preferably 930 nm.

It has been shown that a number of biological tissues such as sub-cutaneous human fat and post-menopausal breast tissue have an absorption peak at around 930 nm. This means that if light with a wavelength of around 930 nm is emitted through a sample of human fat or breast tissue, then a greater proportion of the light at that wavelength will be absorbed than at other wavelengths making it easier to evaluate small differences in absorption values between different tissues. A light with a wavelength of around 930 nm will therefore result in greater absorption by the biological sample 120 and more accurate identification of the biological sample 120.

The light emitted by the laser diode 141 has a narrow spectral bandwidth. The spectral bandwidth is defined as band width of the emitted light at half the maximum intensity. A narrower spectral bandwidth will result in light that is more monochromatic and therefore emits more light at a single wavelength compared to other wavelengths. The substantially monochromatic light emitted by the light source may have a spectral bandwidth below 200nm, preferably below 100 nm, even more preferably below 50 nm. This will also result in more accurate measurements and identification of the biological sample, as the photodiode 142 is influenced by light of other wavelengths.

The photodiode 142 is preferably matched to the wavelength of the laser diode 141, such that the peak or maximum sensitivity of the photodiode 142 is close or identical to the wavelength at which the laser diode 141 emits at a peak intensity.

The photodiode 142 may therefore have a maximum sensitivity at a wavelength in the range of the 300nm to 5000nm, preferably 500nm to 2000nm, even more preferably 800nm to 1000nm, even more preferably 930 nm.

The laser diode 141 and the photodiode 142 are both connected to a controller 160. The controller may be a microcontroller such as the STM32F407VGT6 manufactured by STMicroelectronics, for example.

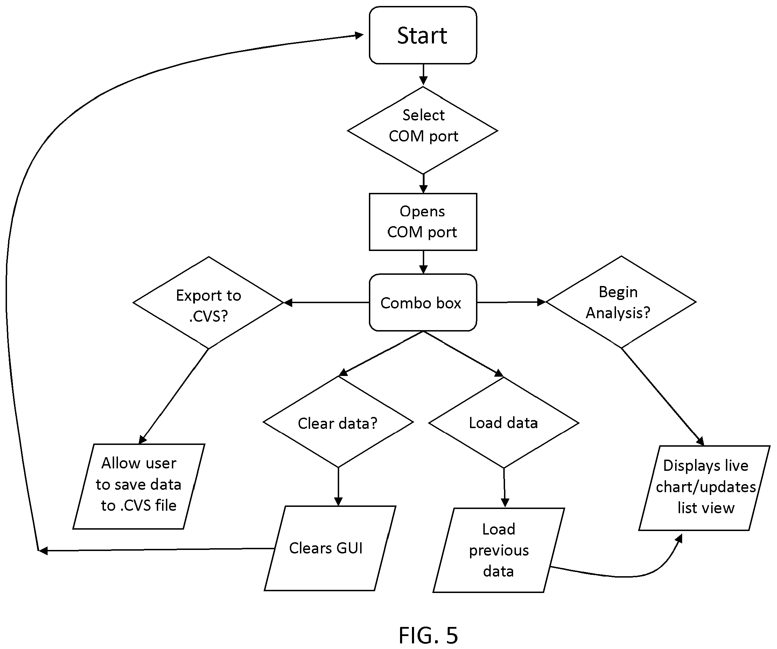

The controller 160 is connected to a display 170 which can show the measurements obtained by the photodiode 142 to a user. The display 170 also comprises an input device to allow a user to provide commands to the controller 160. This input device may be in the form of a touchscreen, a mouse or a keyboard, for example. The input device together with a GUI allows a user to begin the analysis of the biological sample 110 by starting measurements using the laser diode 141 and photodiode 142, load previous measurements of a biological sample, export the measurements as file to an external programme or memory, or clear the measurements (see FIG. 5).

In order to identify the biological sample and determine whether the biological sample 110 is a diseased tissue, a medical practitioner firstly obtains the biological sample 110 from a patient. The biological sample 110 is then placed into the sample holder 120 which is in turn placed into bore 132 of the body portion 131 of the light blocking structure 130. The bore 132 is sized such that it securely holds the sample holder 120 such that it cannot move while measurements are taken. The sensor package 140 comprising the laser diode 141 and the photodiode 142 is then placed over the opening of the bore 132 and the lid 133 is placed over the sensor package 140 and the opening such that no ambient light can reach the sample 110 in the bore 132.

A user can use the input device and the display 170 to start the analysis of the biological sample 110. This will cause the controller 160 to turn on the laser diode 141 which emits substantially monochromatic light directed into the bore 132 towards the biological sample 110. When the light hits the sample 110, some of the light will be absorbed by the sample 110, while some of the light will be reflected by the sample 110.

The amount of light which is reflected by the sample 110 is then detected by the photodiode 142. The photodiode 142 turns the amount of light detected into an electrical signal, which may be in the form of a voltage or a current, which is then sent to the controller 160.

The controller 160 will then calculate an absorption value for the biological sample based on the ratio of the known intensity of emitted light from the laser diode 141 and the light detected by the photodiode 142. Alternatively, the controller 160 will calculate an absorption value based on the output measurements of the photodiode 142, alone, for example, by calculating an absorption value based on the ratio of the output measurement of the photodiode 142 and the maximum output of the photodiode 142.

The photodiode 142 may take several separate measurements over a pre-determined time period and send these to the controller. The controller can then calculate an average absorption value for the biological sample 110 based on the plurality of measurements taken.

Based on the determined absorption value for the biological sample 110 and the known wavelength of light emitted by the laser diode 141, the controller 160 can then identify the biological sample 110. For example, the controller may determine whether the biological sample is healthy breast tissue or a malignant breast tissue. This can be done, for example, by the controller 160 consulting a look-up table of known absorption values and wavelengths, consulting an external database, or using pre-determined upper and lower limits for the absorption value based on empirical data.

The measurements obtained by the photodiode 142 together with the calculated absorption values and the identified biological sample 110 are then displayed on display 170. The user can then use the input device to export the data to a different programme for further processing or an external memory for storage. Alternatively, the user can clear the data and start a new analysis of the biological sample 110 or load data from a previous analysis of a different biological sample.

The present system 100 therefore provides automated system for identifying a biological sample in a quick and accurate manner and allows a determination of whether the sample is a diseased tissue. The system 100 is simple to use, robust and cheap to make and can provide accurate determination of diseased biological tissue. The sensor package 140 and the controller 160 can be relatively cheap off-the-shelf IC components. The light blocking structure 130 and the base structure 150 can be 3D-printed structures. The present system can therefore provide an accurate and automated identification of a biological sample at a fraction of the cost of a spectrophotometer and without the training required to perform a biopsy and tissue analysis using a microscope.

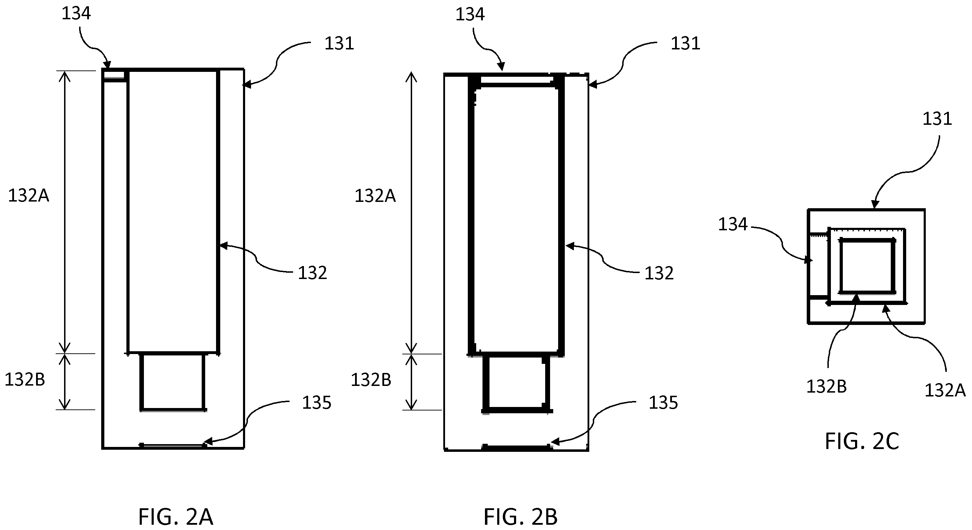

FIGS. 2A to 2C show different detailed views of the body portion 131 of the light blocking structure 130. FIG.2A is a cross-sectional side view of the body portion 131 and FIG. 2B shows a cross-sectional front view of the body potion 131.

As shown in FIGS. 2A and 2B, the body portion 131 is in the shape of a cuboid and comprises a bore 132 which extends partly through the body portion 131. The bore 132 has a single opening on one side of the body portion 131. The cross-section of the bore is square or rectangular, as shown in FIG. 2C, and the bore 132 comprises a first section 132A and a second section 132B. The first section 132A starts at the opening and is wider than the second section 132B which is further away from the opening. The diagonal width of the bore of the first section 132A is therefore greater than the diagonal width of the bore of the second section 132B. The second section 132B is dimensioned to engage the sides of the sample holder 120, which in this case is a standard size cuvette. This means that the cuvette is secured inside the body portion 131 and cannot move while the measurements on the sample 110 are made. The first section 132A is wider to allow the cuvette to be easily inserted and removed from the body portion 132.

The body portion 131 further comprises a side opening 134 which is connected to the opening of the bore 132 from a side of the body portion 131. The side opening 134 may be in the form of a slit or a channel. The side opening allows the sensor package 140 including the laser diode 141 and the photodiode 142 to be placed over the opening of the bore 142. Wires from the sensor package 140 can enter and exit the light blocking structure 130 through the side opening 134.

The body portion 131 also comprises a square indentation at the bottom, opposite the opening of the bore 132. This groove is optional but may be used to engage a corresponding raised portion to stabilise and secure the body portion 131.

FIG. 2C shows a top view of the body portion 131. This clearly shows the rectangular or square cross-section of the body portion 131 as well as the square cross-section of the first section 132A and the second section 132B and also shows that the diagonal width of the second section 132B is smaller than the first section 132A. The side opening 134 which connects the opening of the bore 132 to an orthogonal side of the body portion 131 is also shown.

As mentioned above, the body portion may be made from a non-transparent material such as a plastic or metal and may be 3D-printed or moulded, for example.

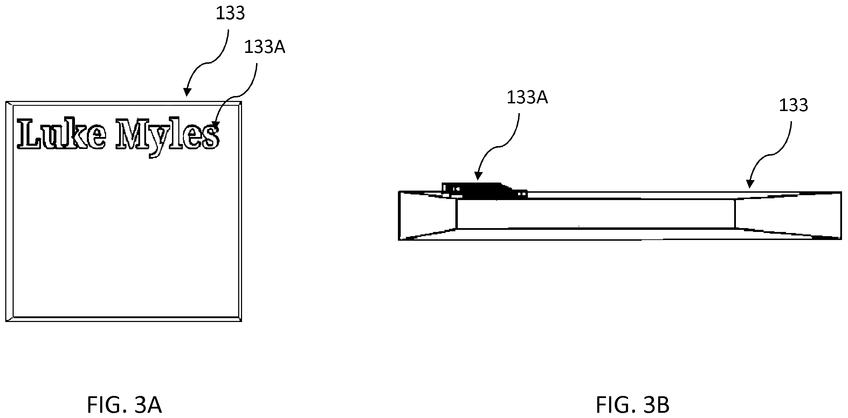

FIG. 3A shows a top view of the lid 133 of the light blocking structure. The lid is non-transparent square-shaped element which dimensioned to fit over the opening of the bore 132 and enclose the sensor package 140, including the laser diode 141 and the photodiode 142, such that no ambient light can reach the biological sample 110. The lid 133 may be provided with insignia 133A.

FIG. 3B shows a perspective side view of the lid 133.

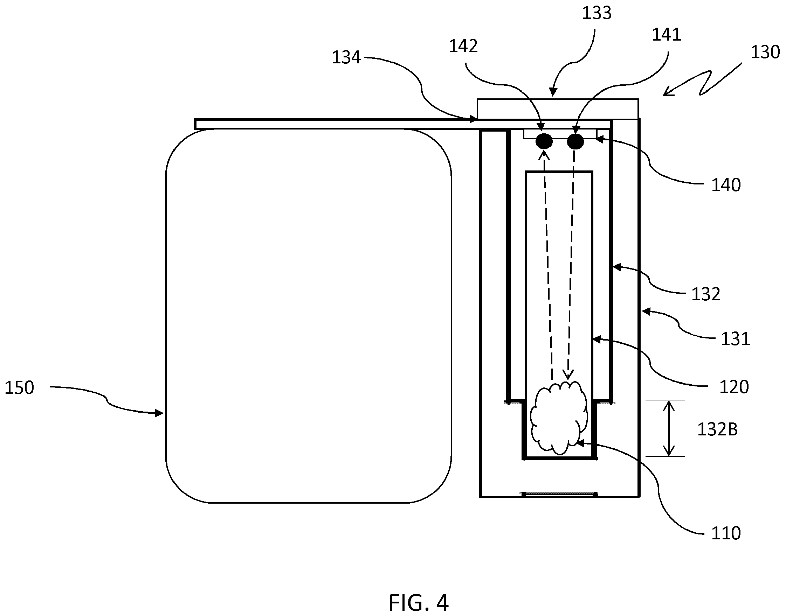

FIG. 4 shows a schematic close-up view of the arrangement of the light blocking structure 130, sensor package 140 and base structure 150. As already mentioned with respect to FIG. 1, the biological sample 110 is placed in the sample holder 120 which is placed within the bore 132 of the light blocking structure. FIG. 4 shows how the second section 132B of the bore 132 engages the bottom of the sample holder 120 and holds it in place.

The sensor package is placed at the top of the body portion 131 over the opening of the bore 132 so that the laser diode 141 can emit light into the bore 132 and the photodiode can detect the reflected light coming from the sample 110 in the bore 132. Part of the sensor package can extend through the side opening 134 out of the light blocking structure 130 and is secured to the base structure to hold the sensor package 140 in place. Alternatively, the entire sensor package 140 can be disposed inside the light blocking structure and only an element carrying the wires connecting the sensor package 140 to the controller 160 extends through the side opening 134 and is secured to the base structure 150. The lid 133 is placed over the opening of the bore and the sensor package 140 to block any ambient light from entering the bore 132 and reaching the sample 110.

FIG. 5 shows a block diagram for a graphical user interface (GUI) used to control the system 100.

At the start, the GUI allows the user to select a communications (COM) port of the controller 160. The controller 160 may have a plurality of COM ports which can be connected to different sensor packages 140. For example, multiple sensor packages having light sources with different wavelengths can be used, and measurements of the sample can be made at different wavelengths of light.

The controller 160 will then open the selected COM port and the GUI will present the user with a combo box. The user will then be able to select from a number of different options.

The user may select 'Begin Analysis?' which results in the controller 160 sending instructions to the sensor package 140 to start taking measurements of the biological sample 110. The display 170 will display the live measurements taken from the photodiode 142 as well as the identified biological sample.

If the user selects 'Load data', previous measurement data may be loaded and displayed as a chart on the display 170.

If the user selects 'Clear Data', the measurement data present on the GUI will be cleared and the GUI will take the user back to the start.

If the user selects 'Export to .CVS?', the measurement data obtained from the photodiode 142 and the controller 160 may be saved as a .CVS file to a memory device. The data may then be loaded into programme for reanalysis or used in a different programme for further analysis.

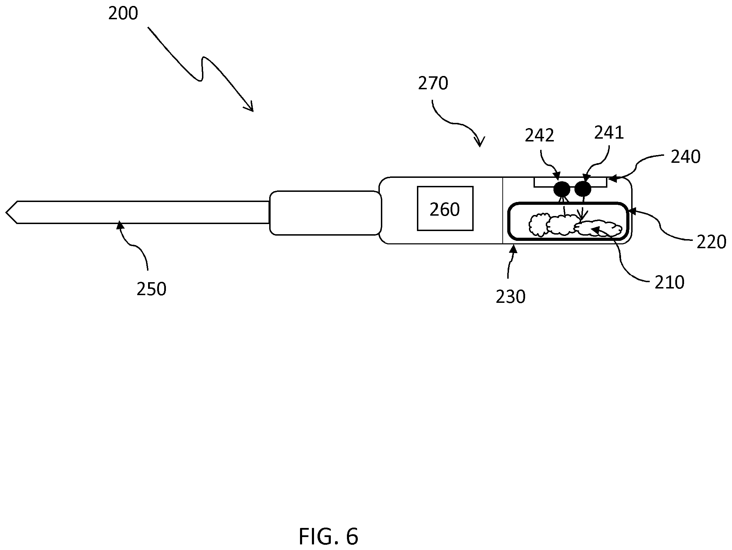

FIG. 6 shows a schematic illustration of a biopsy device 200 with an integrated system for identifying a biological sample obtained by the biopsy device. The biopsy device 200 comprises a biopsy needle 250 for obtaining a biological sample 210 of tissue from a patient. This biological sample 210 may be a breast tissue, for example.

The biopsy device 200 further comprises a sample holder 220 for holding the biological sample 210 obtained with the biopsy needle 250. The sample holder 220 may be disposed in a handle 270 of the biopsy device 200. The biological sample 210 can be transported from the biopsy needle 250 to the sample holder 220 with a vacuum suction device (not shown), which will pull the biological tissue 210 from the biopsy needle 250 into the sample holder 220. The sample holder 220 is disposed within a light blocking structure 230 which is non-transparent and blocks ambient light from reaching the sample holder 220 and biological sample 210. The sample holder 220 may be removable from the light blocking structure 230. A sensor package 240 comprising a light source in the form of a laser diode 241, such as a Vertical Cavity Surface Emitting Laser (VCSEL), and a light detector in the form of a photodiode 242 is also positioned within the light blocking structure 230 on one side of the sample holder 220. The sensor package 240 may be same as sensor package 140 of FIGS. 1 to 4.

The sensor package 240 may be positioned within the light blocking structure 230 but outside of the sample holder 220 such that the light emitted by the laser diode 241 passes through the transparent sample holder 220 before it is absorbed or reflected by the biological sample 210. The reflected light is then detected by the photodiode 242. The sensor package 240 may remain fixed within the light blocking structure 230 while the sample holder 220 can be removed or replaced.

The biopsy device 200 further comprises a controller 260 which is connected to the laser diode 241 and photodiode 242 of sensor package 240. The controller 260 may be identical to controller 160 of FIGS. 1 to 4 and may also be configured to calculate an absorption value for the biological sample 210. For example, this absorption value may be calculated based on the ratio of the known intensity of emitted light from the laser diode 241 and the light detected by the photodiode 242 or based on the output measurements of the photodiode 242, alone, for example, by calculating an absorption value based on the ratio of the output measurement of the photodiode 242 and the maximum output of the photodiode 242. Based on the determined absorption value for the biological sample 210 and the known wavelength of light emitted by the laser diode 241, the controller 260 can then identify the biological sample 210. For example, the controller 260 may determine whether the biological sample is healthy breast tissue or a malignant breast tissue. The controller 260 may be connected to an external display (not shown) or an integrated display (not shown) which can indicate the identified biological tissue to the surgeon. The display may also comprise an input device to allow a user to provide commands to the controller 260.

A surgeon may use the biopsy device 200 to obtain a biological tissue sample, such as biological sample 210, from a patient and obtain a quick initial indication of the type of biological tissue of the biological sample 210, for example, whether the biological sample 210 is a healthy or malignant tissue. This can allow the surgeon to make a more informed decision as to whether another biopsy is necessary before sending the biological sample to a lab to be analysed and waiting for the results. The biopsy device 200 can therefore help to make a biopsy procedure more effective and efficient for the surgeon and patient.

Various modifications within the scope of the appended claims will be apparent to those skilled in the art.

The sample holder 120 may be a cuvette, a test tube, or any other type of suitable vehicle for holding a biological sample.

The system 100 may not comprise a light blocking structure 130.

The light blocking structure 130 may not be cuboid shaped but may be any other suitable shape, such as, for example, spherical, pyramidal.

The bore 132 of the body portion 131 may not comprise a first section 132A and a second section 132B but rather may be a single bore with a constant width.

The light blocking structure 130, 230 may be made from any material which is non-transparent and can block ambient visible and infrared light and is not limited to plastics or metals.

The light blocking structure 130 may be made in any suitable way and is not limited to 3D printing or moulding.

The light blocking structure 130 may not have an indentation 135 or a side opening 134.

The bore 132 is not limited to a square cross-sectional shape but may take other shapes such as a round or triangular cross-sectional shape, for example.

The light blocking structure may not comprise a lid 133.

The lid 133 is not limited to any particular shape, as long as it can block ambient light from entering the bore 132.

The system may not comprise a base structure 150.

The base structure 150 may be made from any suitable material and is not limited to plastic. The base structure 150 may also be made from any suitable manufacturing method.

The laser diode 141, 241 and the photodiode 142, 242 may not be provided in the same sensor package 140, 240 but may be separate components, provided in individual packages.

The light source is not limited to a laser diode 141, 241 but may be an LED or a tuneable laser, for example.

The light detector is not limited to a photodiode 142, 242 but may be a different light detector such as a photoresistor, a photomultiplier tube (PMT), a charge coupled device (CCD) or any other suitable light detector.

The controller 160, 260 may be a microcontroller or any other type of suitable processor which can store and manipulate data, such as a PC, for example.

The system 100 may not comprise a display 170.

The display 170 may be a touchscreen or a standard display 170.

The system 100 may not comprise an input device.

The biopsy device 200 may not comprise a vacuum suction device. The biological sample 210 may be transported from the needle 250 to the sample holder 220 via other means, such as gravity, for example.

The biopsy device 200 may not comprise a light blocking structure 230.

The sensor package 240 may be positioned on the inside of the sample holder 220 such that the light emitted from the laser diode 241 does not pass through the sample holder 220.

The sensor package 240 may be positioned at any one side of the sample holder 220.

The laser diode 241 and photodiode 242 may be positioned at opposite sides of the sample holder 220.

The sample holder 220 may not be positioned in the handle 270 of the biopsy device 200 but may be positioned at another suitable location. The controller 260 may not be positioned in the handle 270 but may also be positioned at another suitable location.

The biopsy device 200 may not comprise a display. Rather, the biopsy device 200 may comprise another type of indicator, for example, in the form of indicator lights, to indicate the type of biological tissue to a user.

All of the above are fully within the scope of the present invention defined by the appended claims and are considered to form the basis for alternative embodiments within the scope of the claimed invention in which one or more combinations of the above described features are applied, without limitation to the specific combination disclosed above.

In light of this, there will be many alternatives which implement the teaching of the present disclosure. The invention is defined by the appended claims.

## Claims

1. A system (100) for identifying a biological sample (110) in a sample holder (120), the system comprising:
a light source (141) for emitting substantially monochrome light directed at the sample holder (120);
a light detector (142) for detecting the amount of light reflected or transmitted by the biological sample (110) and configured to output measurements indicative of the amount of light detected; and
a controller (160) connected to the light detector (142) and configured to identify the biological sample based on the output measurements of the light detector (142),
further comprising a light blocking structure (130) for holding the sample holder, which is configured to block any ambient light from reaching the sample when the light blocking structure is holding the sample holder (120), wherein the light blocking structure (130) comprises a bore (132) for accommodating the sample holder (120), the bore (132) having a single opening,
wherein the light source (141) is disposed at the opening of the bore (132) and configured to emit the substantially monochromatic light into the bore (132) and the light detector (142) is disposed at the opening of the bore (132) and configured to detect the substantially monochromatic light reflected or transmitted by the biological sample (110) in the bore.

2. The system of claim 1, wherein the light blocking structure (130) is non-transparent, and/or wherein the bore (132) has a rectangular cross section, and/or wherein the bore (132) comprises a first section (132A) where the bore is wider and a second section (132B) where the bore is narrower, optionally
wherein the second section (132B) is disposed further away from the opening of the bore (132), further optionally
wherein the second section (132B) is configured to engage the sides of the sample holder (120) to hold the sample holder in place.

3. The system of claim 1 or 2, wherein the light blocking structure (130) further comprises a lid (133) for enclosing the opening of the bore (132), the light source (141) and/or the light detector (142) such that ambient light is blocked from reaching the sample holder (120), and/or wherein the light blocking structure (130) is a 3D-printed structure.

4. The system of any preceding claim, wherein the system comprises the sample holder (120), and/or wherein the sample holder (120) is a cuvette, optionally wherein the cuvette comprises a plurality of straight, transparent sides.

5. The system of any preceding claim, wherein the light source (141) comprises a laser diode and the substantially monochromatic light is a laser light, or wherein the light source (141) comprises a tuneable laser, or wherein the light source (141) comprises an LED, or wherein the light source (141) comprises an infrared LED.

6. The system of any preceding claim, wherein the substantially monochromatic light emitted by the light source (141) has a peak intensity at a wavelength in the range of 300nm to 5000nm, preferably 500nm to 2000nm, even more preferably 800nm to 1000nm, and/or wherein the substantially monochromatic light emitted by the light source (141) has a spectral bandwidth below 200nm, preferably below 100 nm, even more preferably below 50 nm.

7. The system of any preceding claim, wherein the light detector (142) comprises a photodiode, optionally wherein the photodiode has a maximum sensitivity at a wavelength in the range of the 300nm to 5000nm, preferably 500nm to 2000nm, even more preferably 800nm to 1000nm.

8. The system of any preceding claim, wherein the light source (141) and the light detector (142) are provided in a single integrated circuit package, and/or
further comprising a base support for holding the light source (141) and the light detector (142).

9. The system of any preceding claim, wherein the controller (160) is configured to:
calculate an absorption value based on the ratio of the emitted light and the detected light or calculate an absorption value based on the ratio of the output measurement of the light detector and a maximum output of the light detector; and
identify the biological sample based on the absorption value, optionally wherein the controller (160) identifies the biological tissue from a look-up table of known biological tissues based on the calculated absorption value, further optionally wherein the controller (160) is configured to make a plurality of measurements using the light detector and calculate an average absorption value.

10. The system of any preceding claim, further comprising a display (170) connectable to the controller (160) for showing the identified biological sample to the user, optionally
wherein the controller is further configured to show the measurements acquired by the light detector (142) on the display, further optionally
further comprising an input device connectable to the display and the controller to allow a user to begin taking the measurements of the sample, and/or load previously acquired measurements for analysis, and/or export the measurements to a different programme, and/or clear the measurements.

11. A biopsy device (200) for obtaining a biological sample of tissue, the biopsy device comprising:
a biopsy needle (250);
a sample holder (220) for holding the biological sample (210); and
a system for identifying the biological sample in the sample holder according to claim 1.

12. The biopsy device of claim 11, wherein the light source (241) comprises a laser diode and the substantially monochromatic light is a laser light, and/or
wherein the substantially monochromatic light emitted by the light source (241) has a peak intensity at a wavelength in the range of 300nm to 5000nm, preferably 500nm to 2000nm, even more preferably 800nm to 1000nm, and/or
wherein the substantially monochromatic light emitted by the light source (241) has a spectral bandwidth below 200nm, preferably below 100 nm, even more preferably below 50 nm, and/or
wherein the light detector (242) comprises a photodiode, optionally
wherein the photodiode has a maximum sensitivity at a wavelength in the range of the 300nm to 5000nm, preferably 500nm to 2000nm, even more preferably 800nm to 1000nm.

13. The biopsy device of claims 11 or 12, wherein the light source (241) and the light detector (242) are provided in a single integrated circuit package, and/or
wherein the controller (260) is configured to:
calculate an absorption value based on the ratio of the emitted light and the detected light or calculate an absorption value based on the ratio of the output measurement of the light detector and a maximum output of the light detector; and
identify the biological sample based on the absorption value, optionally
wherein the controller (260) identifies the biological tissue from a look-up table of known biological tissues based on the calculated absorption value, further optionally
wherein the controller (260) is configured to make a plurality of measurements using the light detector (242) and calculate an average absorption value.

14. A method for identifying a biological sample (110) in a sample holder (120) using a system having a light source (141), a light detector (142) and a controller (160), the method comprising:
emitting a substantially monochromatic light from the light source (141) at a sample within the sample holder (120);
detecting an amount of light reflected or transmitted by the biological sample (110) with the light detector (142);
outputting measurements from the light detector (142) indicative of the amount of light detected to the controller (160); and
identifying the biological sample (110) based on the output signal of the light detector (142) using the controller,
further comprising blocking any ambient light from reaching the sample using a light blocking structure (130), wherein the light blocking structure comprises a bore (132) for accommodating the sample holder (120), the bore (132) having a single opening,
wherein the light source (141) is disposed at the opening of the bore (132) and configured to emit the substantially monochromatic light into the bore (132) and the light detector (142) is disposed at the opening of the bore (132) and configured to detect the substantially monochromatic light reflected or transmitted by the biological sample (110) in the bore (132).

15. The method of claim 14, wherein identifying the biological sample comprises:
calculating an absorption value based on the ratio of the emitted light and the detected or calculating an absorption value based on the ratio of the output measurement of the light detector (142) and a maximum output of the light detector (142); and
identifying the biological sample based on the absorption value, optionally
wherein the absorption value is an average absorption value based on a plurality of measurements made by the light detector (142).

## Patentansprüche

1. System (100) zum Identifizieren einer biologischen Probe (110) in einem Probenhalter (120), wobei das System umfasst:
eine Lichtquelle (141) zum Emittieren von im Wesentlichen monochromatischem Licht, das auf den Probenhalter (120) gerichtet ist;
einen Lichtdetektor (142) zum Detektieren der Menge an von der biologischen Probe (110) reflektiertem oder übertragenem Licht und ausgebildet zum Ausgeben von Ausgangsmesswerten, die die Menge an detektiertem Licht anzeigen; und
eine Steuereinheit (160), die mit dem Lichtdetektor (142) verbunden ist und zum Identifizieren der biologischen Probe, basierend auf den Ausgangsmesswerten des Lichtdetektors (142), ausgebildet ist,
weiter umfassend eine Lichtabschirmstruktur (130) zum Halten des Probenhalters, die ausgebildet ist, um jegliches Umgebungslicht daran zu hindern, die Probe zu erreichen, wenn die Lichtabschirmstruktur den Probenhalter (120) hält, wobei die Lichtabschirmstruktur (130) eine Bohrung (132) zum Aufnehmen des Probenhalters (120) umfasst, wobei die Bohrung (132) eine einzige Öffnung aufweist,
wobei die Lichtquelle (141) an der Öffnung der Bohrung (132) angeordnet ist und ausgebildet ist, das im Wesentlichen monochromatische Licht in die Bohrung (132) zu emittieren, und der Lichtdetektor (142) an der Öffnung der Bohrung (132) angeordnet ist und ausgebildet ist, das von der biologischen Probe (110) in der Bohrung reflektierte oder übertragene im Wesentlichen monochromatische Licht zu detektieren.

2. System nach Anspruch 1, wobei die Lichtabschirmstruktur (130) nicht transparent ist, und/oder wobei die Bohrung (132) einen rechteckigen Querschnitt aufweist, und/oder wobei die Bohrung (132) einen ersten Abschnitt (132A), in dem die Bohrung breiter ist, und einen zweiten Abschnitt (132B) umfasst, in dem die Bohrung schmaler ist, wahlweise
wobei der zweite Abschnitt (132B) weiter von der Öffnung der Bohrung (132) weg angeordnet ist, weiter wahlweise
wobei der zweite Abschnitt (132B) ausgebildet ist, mit den Seiten des Probenhalters (120) in Eingriff zu kommen, um den Probenhalter an Ort und Stelle zu halten.

3. System nach Anspruch 1 oder 2, wobei die Lichtabschirmstruktur (130) weiter einen Deckel (133) zum Umschließen der Öffnung der Bohrung (132), der Lichtquelle (141) und/oder des Lichtdetektors (142) umfasst, so dass Umgebungslicht daran gehindert wird, den Probenhalter (120) zu erreichen, und/oder wobei die Lichtabschirmstruktur (130) eine 3D-gedruckte Struktur ist.

4. System nach einem vorstehenden Anspruch, wobei das System den Probenhalter (120) umfasst, und/oder wobei der Probenhalter (120) eine Küvette ist, wahlweise
wobei die Küvette eine Vielzahl von geraden, transparenten Seiten umfasst.

5. System nach einem vorstehenden Anspruch, wobei die Lichtquelle (141) eine Laserdiode umfasst und das im Wesentlichen monochromatische Licht ein Laserlicht ist, oder wobei die Lichtquelle (141) einen abstimmbaren Laser umfasst, oder wobei die Lichtquelle (141) eine LED umfasst, oder wobei die Lichtquelle (141) eine Infrarot-LED umfasst.

6. System nach einem vorstehenden Anspruch, wobei das von der Lichtquelle (141) emittierte im Wesentlichen monochromatische Licht eine Spitzenintensität bei einer Wellenlänge im Bereich von 300 nm bis 5000 nm, vorzugsweise 500 nm bis 2000 nm, noch bevorzugter 800 nm bis 1000 nm, aufweist, und/oder wobei das von der Lichtquelle (141) emittierte im Wesentlichen monochromatische Licht eine spektrale Bandbreite unterhalb von 200 nm, vorzugsweise unterhalb von 100 nm, noch bevorzugter unterhalb von 50 nm aufweist.

7. System nach einem vorstehenden Anspruch, wobei der Lichtdetektor (142) eine Fotodiode umfasst, wahlweise wobei die Fotodiode eine maximale Empfindlichkeit bei einer Wellenlänge im Bereich von 300 nm bis 5000 nm, vorzugsweise 500 nm bis 2000 nm, noch bevorzugter 800 nm bis 1000 nm aufweist.

8. System nach einem vorstehenden Anspruch, wobei die Lichtquelle (141) und der Lichtdetektor (142) in einem einzigen Gehäuse einer integrierten Schaltung bereitgestellt sind, und/oder
weiter umfassend einen Basisträger zum Halten der Lichtquelle (141) und des Lichtdetektors (142).

9. System nach einem vorstehenden Anspruch, wobei die Steuereinheit (160) ausgebildet ist zum:
Berechnen eines Absorptionswerts, basierend auf dem Verhältnis des emittierten Lichts und des detektierten Lichts, oder Berechnen eines Absorptionswerts, basierend auf dem Verhältnis des Ausgangsmesswerts des Lichtdetektors und eines maximalen Ausgangs des Lichtdetektors; und
Identifizieren der biologischen Probe, basierend auf dem Absorptionswert, wahlweise, wobei die Steuereinheit (160) das biologische Gewebe aus einer Nachschlagetabelle bekannter biologischer Gewebe, basierend auf dem berechneten Absorptionswert, identifiziert, wobei weiter wahlweise die Steuereinheit (160) ausgebildet ist, eine Vielzahl von Messungen unter Verwendung des Lichtdetektors vorzunehmen und einen mittleren Absorptionswert zu berechnen.

10. System nach einem vorstehenden Anspruch, weiter umfassend eine Anzeige (170), die mit der Steuereinheit (160) schaltbar ist, zum Anzeigen der identifizierten biologischen Probe für den Benutzer, wahlweise
wobei die Steuereinheit weiter ausgebildet ist, die vom Lichtdetektor (142) erfassten Messungen auf der Anzeige anzuzeigen, weiter wahlweise
weiter umfassend eine Eingabevorrichtung, die mit der Anzeige und der Steuereinheit schaltbar ist, um es einem Benutzer zu ermöglichen, mit einem Vornehmen der Messungen der Probe zu beginnen, und/oder zuvor erfasste Messungen zur Analyse zu laden, und/oder die Messungen in ein anderes Programm zu exportieren, und/oder die Messungen zu löschen.

11. Biopsievorrichtung (200) zum Erhalten einer biologischen Gewebeprobe, wobei die Biopsievorrichtung umfasst:
eine Biopsienadel (250);
einen Probenhalter (220) zum Halten der biologischen Probe (210); und
ein System zum Identifizieren der biologischen Probe in dem Probenhalter nach Anspruch 1.

12. Biopsievorrichtung nach Anspruch 11, wobei die Lichtquelle (241) eine Laserdiode umfasst und das im Wesentlichen monochromatische Licht ein Laserlicht ist, und/oder
wobei das von der Lichtquelle (241) emittierte im Wesentlichen monochromatische Licht eine Spitzenintensität bei einer Wellenlänge im Bereich von 300 nm bis 5000 nm, vorzugsweise 500 nm bis 2000 nm, noch bevorzugter 800 nm bis 1000 nm aufweist, und/oder
wobei das von der Lichtquelle (241) emittierte im Wesentlichen monochromatische Licht eine spektrale Bandbreite unterhalb von 200 nm, vorzugsweise unterhalb von 100 nm, noch bevorzugter unterhalb von 50 nm aufweist, und/oder
wobei der Lichtdetektor (242) eine Fotodiode umfasst, wahlweise
wobei die Fotodiode eine maximale Empfindlichkeit bei einer Wellenlänge im Bereich von 300 nm bis 5000 nm, vorzugsweise 500 nm bis 2000 nm, noch bevorzugter 800 nm bis 1000 nm aufweist.

13. Biopsievorrichtung nach den Ansprüchen 11 oder 12, wobei die Lichtquelle (241) und der Lichtdetektor (242) in einem einzigen Gehäuse einer integrierten Schaltung bereitgestellt sind, und/oder
wobei die Steuereinheit (260) ausgebildet ist zum:
Berechnen eines Absorptionswerts, basierend auf dem Verhältnis des emittierten Lichts und des detektierten Lichts, oder Berechnen eines Absorptionswerts, basierend auf dem Verhältnis des Ausgangsmesswerts des Lichtdetektors und eines maximalen Ausgangs des Lichtdetektors; und
Identifizieren der biologischen Probe basierend auf dem Absorptionswert, wahlweise
wobei die Steuereinheit (260) das biologische Gewebe aus einer Nachschlagetabelle bekannter biologischer Gewebe basierend auf dem berechneten Absorptionswert identifiziert, weiter wahlweise
wobei die Steuereinheit (260) ausgebildet ist, eine Vielzahl von Messungen unter Verwendung des Lichtdetektors (242) vorzunehmen und einen mittleren Absorptionswert zu berechnen.

14. Verfahren zum Identifizieren einer biologischen Probe (110) in einem Probenhalter (120) unter Verwendung eines Systems mit einer Lichtquelle (141), einem Lichtdetektor (142) und einer Steuereinheit (160), wobei das Verfahren umfasst:
Emittieren eines im Wesentlichen monochromatischen Lichts von der Lichtquelle (141) auf eine Probe innerhalb des Probenhalters (120);
Detektieren einer Menge an von der biologischen Probe (110) reflektiertem oder übertragenem Licht mit dem Lichtdetektor (142);
Ausgeben von Messwerten von dem Lichtdetektor (142), die die Menge an detektiertem Licht anzeigen, an die Steuereinheit (160); und
Identifizieren der biologischen Probe (110) basierend auf dem Ausgangssignal des Lichtdetektors (142) unter Verwendung der Steuereinheit,
weiter umfassend das Hindern von jeglichem Umgebungslicht unter Verwendung einer Lichtabschirmstruktur (130) daran, die Probe zu erreichen, wobei die Lichtabschirmstruktur eine Bohrung (132) zum Aufnehmen des Probenhalters (120) umfasst, wobei die Bohrung (132) eine einzige Öffnung aufweist,
wobei die Lichtquelle (141) an der Öffnung der Bohrung (132) angeordnet ist und ausgebildet ist, das im Wesentlichen monochromatische Licht in die Bohrung (132) zu emittieren, und der Lichtdetektor (142) an der Öffnung der Bohrung (132) angeordnet ist und ausgebildet ist, das von der biologischen Probe (110) in der Bohrung (132) reflektierte oder übertragene im Wesentlichen monochromatische Licht zu detektieren.

15. Verfahren nach Anspruch 14, wobei ein Identifizieren der biologischen Probe umfasst:
Berechnen eines Absorptionswerts, basierend auf dem Verhältnis des emittierten und des detektierten Lichts, oder Berechnen eines Absorptionswerts, basierend auf dem Verhältnis des Ausgangsmesswerts des Lichtdetektors (142) und eines maximalen Ausgangs des Lichtdetektors (142); und
Identifizieren der biologischen Probe, basierend auf dem Absorptionswert, wahlweise
wobei der Absorptionswert ein mittlerer Absorptionswert, basierend auf einer Vielzahl von durch den Lichtdetektor (142) vorgenommenen Messungen, ist.

## Revendications

1. Système (100) pour identifier un échantillon biologique (110) dans un porte-échantillon (120), le système comprenant :
une source lumineuse (141) pour émettre une lumière sensiblement monochrome dirigée au niveau du porte-échantillon (120) ;
un détecteur (142) de lumière destiné à détecter la quantité de lumière réfléchie ou transmise par l'échantillon biologique (110) et configuré pour délivrer des mesures indicatives de la quantité de lumière détectée ; et
un contrôleur (160) relié au détecteur (142) de lumière et configuré pour identifier l'échantillon biologique sur la base des mesures délivrées du détecteur (142) de lumière,
comprenant en outre une structure de blocage (130) de lumière pour maintenir le porte-échantillon, qui est configurée pour bloquer toute lumière ambiante afin qu'elle n'atteigne pas l'échantillon lorsque la structure de blocage de lumière maintient le porte-échantillon (120), dans lequel la structure de blocage (130) de lumière comprend un alésage (132) pour recevoir le porte-échantillon (120), l'alésage (132) présentant une unique ouverture,
dans lequel la source lumineuse (141) est disposée au niveau de l'ouverture de l'alésage (132) et configurée pour émettre la lumière sensiblement monochromatique dans l'alésage (132) et le détecteur (142) de lumière est disposé au niveau de l'ouverture de l'alésage (132) et configuré pour détecter la lumière sensiblement monochromatique réfléchie ou transmise par l'échantillon biologique (110) dans l'alésage.

2. Système selon la revendication 1, dans lequel la structure de blocage (130) de lumière est non transparente, et/ou dans lequel l'alésage (132) présente une section transversale rectangulaire, et/ou dans lequel l'alésage (132) comprend une première section (132A) où l'alésage est plus large et une deuxième section (132B) où l'alésage est plus étroit, facultativement
dans lequel la deuxième section (132B) est disposée plus loin de l'ouverture de l'alésage (132), plus facultativement
dans lequel la deuxième section (132B) est configurée pour venir en prise avec les côtés du porte-échantillon (120) afin de maintenir le porte-échantillon en place.

3. Système selon la revendication 1 ou la revendication 2, dans lequel la structure de blocage (130) de lumière comprend en outre un couvercle (133) pour enfermer l'ouverture de l'alésage (132), la source lumineuse (141) et/ou le détecteur (142) de lumière de sorte que la lumière ambiante soit empêchée d'atteindre le porte-échantillon (120), et/ou dans lequel la structure de blocage (130) de lumière est une structure imprimée en 3D.

4. Système selon une quelconque revendication précédente, dans lequel le système comprend le porte-échantillon (120), et/ou dans lequel le porte-échantillon (120) est une cuvette, facultativement
dans lequel la cuvette comprend une pluralité de côtés rectilignes, transparents.

5. Système selon une quelconque revendication précédente, dans lequel la source lumineuse (141) comprend une diode laser et la lumière sensiblement monochromatique est une lumière laser, ou dans lequel la source lumineuse (141) comprend un laser accordable, ou dans lequel la source lumineuse (141) comprend une LED, ou dans lequel la source lumineuse (141) comprend une LED infrarouge.

6. Système selon une quelconque revendication précédente, dans lequel la lumière sensiblement monochromatique émise par la source lumineuse (141) présente une intensité de crête à une longueur d'onde dans la plage de 300 nm à 5000 nm, de préférence 500 nm à 2000 nm, plus préférentiellement 800 nm à 1000 nm, et/ou dans lequel la lumière sensiblement monochromatique émise par la source lumineuse (141) présente une largeur spectrale inférieure à 200 nm, de préférence inférieure à 100 nm, plus préférentiellement inférieure à 50 nm.

7. Système selon une quelconque revendication précédente, dans lequel le détecteur (142) de lumière comprend une photodiode, facultativement dans lequel la photodiode présente une sensibilité maximale à une longueur d'onde dans la plage de 300 nm à 5000 nm, de préférence 500 nm à 2000 nm, plus préférentiellement 800 nm à 1000 nm.

8. Système selon une quelconque revendication précédente, dans lequel la source lumineuse (141) et le détecteur (142) de lumière sont prévus dans un boîtier unique de circuit intégré, et/ou
comprenant en outre un support de base pour maintenir la source lumineuse (141) et le détecteur (142) de lumière.

9. Système selon une quelconque revendication précédente, dans lequel le contrôleur (160) est configuré pour :
calculer une valeur d'absorption sur la base du rapport de la lumière émise et de la lumière détectée ou calculer une valeur d'absorption sur la base du rapport de la mesure délivrée du détecteur de lumière et d'une sortie maximale du détecteur de lumière ; et
identifier l'échantillon biologique sur la base de la valeur d'absorption, facultativement dans lequel le contrôleur (160) identifie le tissu biologique à partir d'une table de correspondance de tissus biologiques connus sur la base de la valeur d'absorption calculée, plus facultativement dans lequel le contrôleur (160) est configuré pour effectuer une pluralité de mesures en utilisant le détecteur de lumière et calculer une valeur d'absorption moyenne.

10. Système selon une quelconque revendication précédente, comprenant en outre un affichage (170) connectable au contrôleur (160) pour montrer l'échantillon biologique identifié à l'utilisateur, facultativement
dans lequel le contrôleur est en outre configuré pour montrer les mesures acquises par le détecteur (142) de lumière sur l'affichage, plus facultativement
comprenant en outre un dispositif d'entrée connectable à l'affichage et au contrôleur pour permettre à un utilisateur de commencer à prendre les mesures de l'échantillon, et/ou de charger des mesures acquises précédemment pour analyse, et/ou d'exporter les mesures vers un programme différent, et/ou d'effacer les mesures.

11. Dispositif de biopsie (200) pour obtenir un échantillon biologique de tissu, le dispositif de biopsie comprenant :
une aiguille (250) de biopsie ;
un porte-échantillon (220) pour maintenir l'échantillon biologique (210) ; et
un système pour identifier l'échantillon biologique dans le porte-échantillon selon la revendication 1.

12. Dispositif de biopsie selon la revendication 11, dans lequel la source lumineuse (241) comprend une diode laser et la lumière sensiblement monochromatique est une lumière laser, et/ou
dans lequel la lumière sensiblement monochromatique émise par la source lumineuse (241) présente une intensité de crête à une longueur d'onde dans la plage de 300 nm à 5000 nm, de préférence 500 nm à 2000 nm, plus préférentiellement 800 nm à 1000 nm, et/ou
dans lequel la lumière sensiblement monochromatique émise par la source lumineuse (241) présente une largeur spectrale inférieure à 200 nm, de préférence inférieure à 100 nm, plus préférentiellement inférieure à 50 nm, et/ou
dans lequel le détecteur de lumière (242) comprend une photodiode, facultativement
dans lequel la photodiode présente une sensibilité maximale à une longueur d'onde dans la plage de 300 nm à 5000 nm, de préférence 500 nm à 2000 nm, plus préférentiellement 800 nm à 1000 nm.

13. Dispositif de biopsie selon les revendications 11 ou 12, dans lequel la source lumineuse (241) et le détecteur de lumière (242) sont prévus dans un boîtier unique de circuit intégré, et/ou
dans lequel le contrôleur (260) est configuré pour :
calculer une valeur d'absorption sur la base du rapport de la lumière émise et de la lumière détectée ou calculer une valeur d'absorption sur la base du rapport de la mesure délivrée du détecteur de lumière et d'une sortie maximale du détecteur de lumière ; et
identifier l'échantillon biologique sur la base de la valeur d'absorption, facultativement
dans lequel le contrôleur (260) identifie le tissu biologique à partir d'une table de correspondance de tissus biologiques connus sur la base de la valeur d'absorption calculée, plus facultativement
dans lequel le contrôleur (260) est configuré pour effectuer une pluralité de mesures en utilisant le détecteur de lumière (242) et calculer une valeur d'absorption moyenne.

14. Procédé pour identifier un échantillon biologique (110) dans un porte-échantillon (120) en utilisant un système présentant une source lumineuse (141), un détecteur (142) de lumière et un contrôleur (160), le procédé comprenant :
l'émission d'une lumière sensiblement monochromatique depuis la source lumineuse (141) au niveau d'un échantillon à l'intérieur du porte-échantillon (120) ;
la détection d'une quantité de lumière réfléchie ou transmise par l'échantillon biologique (110) avec le détecteur (142) de lumière ;
la délivrance au contrôleur (160) des mesures provenant du détecteur (142) de lumière indicatives de la quantité de lumière détectée ; et
l'identification de l'échantillon biologique (110) sur la base du signal de sortie du détecteur (142) de lumière en utilisant le contrôleur,
comprenant en outre le blocage de toute lumière ambiante afin qu'elle n'atteigne pas l'échantillon au moyen d'une structure de blocage (130) de lumière, dans lequel la structure de blocage de lumière comprend un alésage (132) pour recevoir le porte-échantillon (120), l'alésage (132) présentant une unique ouverture,
dans lequel la source lumineuse (141) est disposée au niveau de l'ouverture de l'alésage (132) et configurée pour émettre la lumière sensiblement monochromatique dans l'alésage (132) et le détecteur (142) de lumière est disposé au niveau de l'ouverture de l'alésage (132) et configuré pour détecter la lumière sensiblement monochromatique réfléchie ou transmise par l'échantillon biologique (110) dans l'alésage (132).

15. Procédé selon la revendication 14, dans lequel l'identification de l'échantillon biologique comprend :
le calcul d'une valeur d'absorption sur la base du rapport de la lumière émise et de la lumière détectée ou le calcul d'une valeur d'absorption sur la base du rapport de la mesure délivrée du détecteur (142) de lumière et d'une sortie maximale du détecteur (142) de lumière ; et
l'identification de l'échantillon biologique sur la base de la valeur d'absorption, facultativement
dans lequel la valeur d'absorption est une valeur d'absorption moyenne sur la base d'une pluralité de mesures effectuées par le détecteur (142) de lumière.
